# EUROPÄISCHE PATENTANMELDUNG

(11) **EP 1 524 030 A1**
(43) Veröffentlichungstag der Anmeldung: **20.04.2005**
(21) Anmeldenummer: 03023471.0
(22) Anmeldetag: 18.10.2003
(51) Int. Cl.: B01J 13/04, B01J 13/10, B05B 1/02, B05B 7/04

(54) **Verfahren und Vorrichtung zur Herstellung von Mikrokaspseln**

(71) Anmelder: Cognis Iberia S.L, 08755 Castellbisbal (ES)
(72) Erfinder: Viladot Petit, Josep-Lluis, Dr., 08018 Barcelona (ES); Asensio, Juan-Antonio, 08820 El Prat de Llobregat (ES); Seva, Manuel, 08755 Castellbisal (Barcelona) (ES)
(74) Vertreter: Fabry, Bernd, Dr.

(57) **Zusammenfassung**

Vorgeschlagen wird ein Verfahren zur kontinuierlichen Herstellung von Mikrokapseln mit einem mittleren Durchmesser von 0,1 bis 5 mm durch Vertropfen und spontane Koazervation einer gegebenenfalls mit Wirk- und Zusatzstoffen beladenen Zubereitung einer ersten Komponente (a) in die Zubereitung einer zweiten Komponente (b), welches sich dadurch auszeichnet, dass die Vertropfung durch mindestens eine Kapillare erfolgt und der Abriss der Tropfen am Auslass der Kapillare durch mindestens einen horizontal, tangential oder vertikal zur Fallrichtung der Tropfen verlaufenden Gasstrom bewirkt wird.

## Beschreibung

### Gebiet der Erfindung

Die Erfindung befindet sich auf dem Gebiet der Verkapselung von Wirkstoffen und betrifft ein neues Verfahren sowie eine Vorrichtung zur Herstellung von Mikrokapseln durch Vertropfung.

### Stand der Technik

Unter den Begriffen "Mikrokapsel" oder "Nanokapsel" werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammern angegeben ist jeweils das *Hüllmaterial) : Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide).

Die Herstellung derartiger Mikrokapseln erfolgt in der Regel durch Vertropfung. Hierbei wird eine erste wässrige Zubereitung, welche ein erstes Monomer gegebenenfalls zusammen mit den Wirk- und Zusatzstoffen enthält, in ein Bad getropft, welches im wesentlichen das zweite Monomer enthält. Die Monomeren, beispielsweise gegensätzlich geladene Polyelelektrolyte oder die Kombination Dicarbonsäurechlorid/Diamin, werden dabei so ausgewählt, dass es beim Inkontakttreten zu einer spontanen Koazervation bzw. Grenzflächenpolymerisation kommt. Im simpelsten Fall erfolgt die Vertropfung mit Hilfe eines Tropftrichters, was für einen Laborversuch sicher ausreichend ist, für die technische Umsetzung jedoch nicht in Frage kommt. Die industrielle Herstellung von Mikrokapseln erfolgt vielmehr unter Einsatz von Druckbehältern, deren Bodenplatte mit einer Vielzahl von feinen Düsen ausgestattet ist. Die Monomerlösung wird bei in der Regel leicht erhöhtem Druck kontinuierlich durch die Kapillaren gepresst. Ein auf diese Weise am Auslass der Kapillaren gebildeter Tropfen formt sich, bis die Schwerkraft die Adhäsion übersteigt, der Flüssigkeitsfilm abreißt und der Tropfen dann in das Bad fällt, wo die Koazervation, d.h. die Bildung der Kapselhülle erfolgt. Von Nachteil ist dabei jedoch, dass die Tropfen - und damit die sich bildenden Mikrokapseln - vergleichsweise groß sind und typischerweise einen Durchmesser von etwa 1 bis 2 mm aufweisen. Das Verfahren ist damit wenig geeignet, speziell Mikrokapseln mit deutlich kleineren mittleren Durchmessern herzustellen.

Die Aufgabe der vorliegenden Erfindung hat folglich darin bestanden, bekannte Vertropfungsverfahren zur kontinuierlichen Herstellung von Mikrokapseln dahingehend zu verändern, dass auch im technischen Maßstab, dass mit möglichst geringem technischen Aufwand auch Kapseln mit mittleren Durchmessern im Bereich von 0,1 bis 5 mm erhält sind.

### Beschreibung der Erfindung

Ein erster Gegenstand der Erfindung betrifft ein Verfahren zur kontinuierlichen Herstellung von Mikrokapseln mit einem mittleren Durchmesser von 0,1 bis 5, vorzugsweise 0,5 bis 1 mm durch Vertropfen und spontane Koazervation einer gegebenenfalls mit Wirk- und Zusatzstoffen beladenen Zubereitung einer ersten Komponente (a) in die Zubereitung einer zweiten Komponente (b), welches sich dadurch auszeichnet, dass die Vertropfung durch mindestens eine Kapillare erfolgt und der Abriss der Tropfen am Auslass der Kapillare durch mindestens einen horizontal, tangential oder vertikal zur Fallrichtung der Tropfen verlaufenden Gasstrom bewirkt wird.

Das zentrale Element der Erfindung besteht dabei darin, dass das Wachstum der Tropfen am Auslass der Kapillaren nicht dadurch bestimmt wird, dass schließlich die Schwerkraft die Adhäsionskraft übersteigt, sondern der Abriss des Tropfens durch einen Gasstrom bewirkt wird, bevor dieser eine bestimmte Größe übersteigt. Dabei ist es durch Veränderung des Druckes, mit dem der Gasstrom die Kapillare umströmt, problemlos möglich, die Tropfengröße - und damit natürlich auch die Größe der resultierenden Mikrokapseln - präzise einzustellen.

### Vertropfungsverfahren

In der einfachsten Ausführung des erfindungsgemäßen Verfahrens erfolgt die Vertropfung über eine einzelne Düse. Im Hinblick auf die Herstellung der Mikrokapseln im technischen Maßstab, empfiehlt es sich natürlich, die Vertropfung über ein System von vielen, beispielsweise 10 bis 1000 und vorzugsweise 50 bis 200 gleichartigen, parallel zueinander angeordneten Kapillaren durchzuführen, welche beispielsweise auf einer Lochscheibe angeordnet sind, die den Boden eines Druckbehälters darstellt, welcher die Komponente (a) enthält. Die Kapillaren weisen dabei am Auslass vorzugsweise einen Durchmesser von 0,05 bis 2 mm auf, während ihre Länge unkritisch ist und in der Regel bei 1 bis 2 cm liegt, was letztlich durch die Stärke der Lochplatte bestimmt wird, in der sie angeordnet sind. Bei dem Druckbehälter, der die zu vertropfende erste Komponente enthält, handelt es sich um einen Standardautoklaven, der diskontinuierlich, vorzugsweise aber kontinuierlich mit dem Rohstoff befüllt wird. Zur Beschleunigung der Vertropfung arbeitet man vorzugsweise bei leichtem Überdruck, so dass das Verfahrens als solches in der Regel bei einem Druck von 1 bis 5 bar durchgeführt wird. Das zentrale Element des erfindungsgemäßen Verfahrens besteht wie schon erläutert darin, den Abriss der Tropfen von der Spitze der Kapillare durch einen lateralen Gasstrom zu erzwingen, bevor diese so groß geworden sind, dass der Flüssigkeitsfilm infolge der Schwerkraft abreißt. Vorzugsweise arbeitet man mit Luft, obschon als Gas auch Stickstoff in Frage kommt. Je stärker der Gasstrom ist, um so früher reißen die Tröpfchen von der Kapillare ab und bilden entsprechend kleine Mikrokapseln. Über den Druck des Gasstromes lässt sich somit die Teilchengröße sehr präzise einstellen. Üblicherweise wird dabei mit Drücken im Bereich von 0,01 bis 3 bar gearbeitet. Obschon es an sich ausreichend ist, die Kapillaren nur von einer Seite mit dem Gas zu umströmen, hat es sich als vorteilhaft erwiesen, mindestens zwei einander entgegengerichtete Gasströme auf die Austrittsöffnung der Düsen zu lenken, um sicherzustellen, dass die abreißenden Tropfen nicht unkontrolliert umherspritzen, sondern möglichst senkrecht in das Bad fallen. In einer weiteren speziellen Ausgestaltungsform der Erfindung ist die Lochplatte, welche die Kapillaren aufnimmt, derart ausgestaltet, dass sie in wenigstens einer Ebene von Kanälen durchzogen wird, durch welche die Gasströme geleitet werden. Da die Kapillaren in den Löchern der Lochplatte nicht fest montiert sind, sondern Spiel haben, kann der Gasstrom entlang des Längsschnittes der Düsen entweichen und so den Abriss der Tröpfchen am Auslass der Kapillaren bewirken. Ein weiterer konstruktiver Parameter besteht in der Stärke der Lochscheibe : dieser kann so gewählt sein, dass die Kapillaren aus der Scheibe hervorstehen oder darin versenkt sind. Im ersten Fall ist der Gasstrom schwächer und erlaubt die Bildung größerer Tropfen bzw. Mikrokapseln, im zweiten Fall ist der Gasstrom stärker und führt zum umgekehrten Ergebnis.

### Vorrichtung

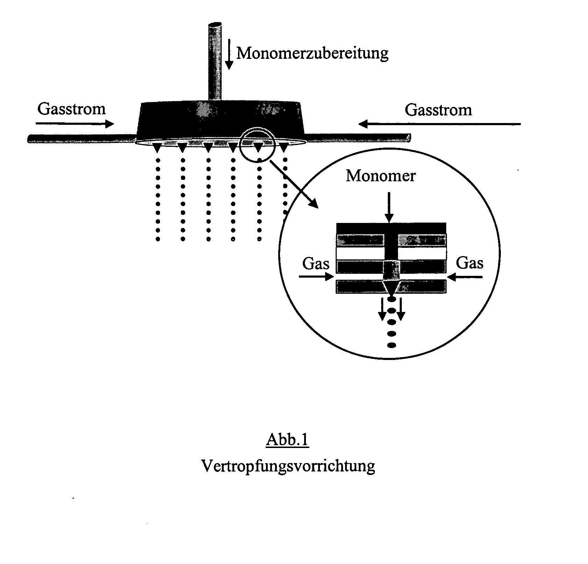

Ein weiterer Gegenstand der Erfindung betrifft eine Vorrichtung zur Vertropfung von Monomerlösungen, bestehend aus einem Druckbehälter (1) mit einem Zulauf (2) für die zu vertropfenden Einsatzstoffe, einer als Boden des Druckbehälters ausgelegten Lochscheibe (3), welche (a) Bohrungen zur Aufnahme von Kapillardüsen besitzt und (b) in - mindestens - einer Ebene horizontal zur Längsachse der Kapillaren von Kanälen durchzogen wird, durch die ein konstanter Gasstrom gelenkt werden kann. Der Druckbehälter ist üblicherweise zylindrisch geformt und kann einen Durchmesser von 10 bis 100 cm sowie ein Fassungsvermögen von 0,25 bis 5 1 besitzen. Der Zulauf für die Rohstoffmasse befindet sich vorzugsweise im oberen Drittel des Druckbehälters und ist beheizbar ausgelegt, so dass nicht nur Lösungen, sondern falls erforderlich auch Schmelzen gefördert werden können. Da die Vertropfung vorzugsweise bei leichtem Überdruck erfolgt, ist der Zulauf mit einer Fördervorrichtung versehen, die das Einbringen der Ausgangsstoffe auch gegen einen Druck von bis zu 5 bar gestattet. Die Lochplatte ist in regelmäßigen Abständen mit Bohrungen für die Aufnahme der Kapillaren versehen, wobei deren Durchmesser sich nach den Düsen richtet und in der Regel 0,5 bis 2,5 mm beträgt. Der Abstand von Bohrung zu Bohrung beträgt üblicherweise etwa 1 cm, wobei die Bohrungen typisch in Form von konzentrischen Kreisen auf der Lochplatte verteilt sind. Die Lochplatte enthält Kanäle, durch die von verschiedenen Seiten Gas, in der Regel Luft oder Stickstoff eingeblasen werden kann. Eine schematische Darstellung der Vorrichtung ist in Abb.1 wiedergegeben.

### Ausgangsstoffe und Koazervation

Das erfindungsgemäße Verfahren ist auf die Herstellung solcher Mikrokapseln anwendbar, bei denen durch Zusammentritt zweier Komponenten eine spontane Koazervation im Sinne einer Grenzflächenpolymerisation oder Fällungsreaktion erfolgt. Geeignete Komponenten (a) und (b) sind beispielsweise gegensätzlich geladene Polyelektrolyte, also etwa Anionpolymere (z.B. Polyacrylate, Alginsäuresalze) und Kationpolymere (z.B. Chitosan). Ebenso kommen Dicarbonsäurechloride und Diamine, beispielsweise Sebacin- oder Adipinsäuredichlorid und Hexamethylendiamin in Betracht. Alternativ können auch als Komponente (a) Stoffe eingesetzt werden, die bei erhöhter Temperatur (z.B. oberhalb von 25 bis 30 °C) flüssig oder pastös vorliegen und in der Kälte (z.B. bei 5 bis 15 °C) gelieren, während als Komponente (b) kosmetisch akzeptable Ölkörper in Frage kommen. Ein Beispiel für Komponente (a) ist Gelatine, als Ölkörper kommen Mineralöle, Fettsäureester, Dialkylether und dergleichen in Frage. Bei den Zubereitungen kann es sich um wässrige oder ölige Formulierungen handeln; ebenso können Emulsionen vertropft werden bzw. als Vorlage ("Bad") dienen, in die die Vertropfung hinein erfolgt. Geeignete Beispiele für Wirkstoffe und Hilfsstoffe sowie für weitere Parameter, die allein die Verkapselung der Wirkstoffe betreffen, sind beispielsweise den Druckschriften **WO 01/01926, WO 01/01927, WO 01/01928, WO 01/01929** (Primacare) zu entnehmen, deren Inhalt ausdrücklich von der Lehre der vorliegenden Erfindung miteingeschlossen wird. Falls erforderlich, werden Druckbehälter und Vertropfungseinrichtung beheizt und/oder die Vorlage gekühlt. Die fertigen Mikrokapseln können dann in an sich bekannter Weise aufgearbeitet werden, d.h. sie werden gewaschen, gesiebt und getrocknet.

## Patentansprüche

1. Verfahren zur kontinuierlichen Herstellung von Mikrokapseln mit einem mittleren Durchmesser von 0,1 bis 5 mm durch Vertropfen und spontane Koazervation einer gegebenenfalls mit Wirk- und Zusatzstoffen beladenen Zubereitung einer ersten Komponente (a) in die Zubereitung einer zweiten Komponente (b), **dadurch gekennzeichnet, dass** die Vertropfung durch mindestens eine Kapillare erfolgt und der Abriss der Tropfen am Auslass der Kapillare durch mindestens einen horizontal, tangential oder vertikal zur Fallrichtung der Tropfen verlaufenden Gasstrom bewirkt wird.

2. Verfahren nach Anspruch 1, **dadurch gekennzeichnet, dass** die Vertropfung über ein System von 1 bis 1000 gleichartigen, parallel zueinander angeordneten Kapillaren erfolgt.

3. Verfahren nach den Ansprüchen 1 und/oder 2, **dadurch gekennzeichnet, dass** die Kapillaren am Auslass einen Durchmesser von 0,5 bis 2 mm aufweisen.

4. Verfahren nach mindestens einem der Ansprüche 1 bis 3, **dadurch gekennzeichnet, dass** die Vertropfung bei einem Druck von 1 bis 5 bar durchgeführt wird.

5. Verfahren nach mindestens einem der Ansprüche 1 bis 4, **dadurch gekennzeichnet, dass** die Kapillare mit Luft oder Stickstoff begast wird.

6. Verfahren nach mindestens einem der Ansprüche 1 bis 5, **dadurch gekennzeichnet, dass** der Gasstrom einen Druck von 0,01 bis 3 bar aufweist.

7. Verfahren nach mindestens einem der Ansprüche 1 bis 6, **dadurch gekennzeichnet, dass** die Kapillare mit wenigstens zwei Strömen begast wird.

8. Verfahren nach mindestens einem der Ansprüche 1 bis 7, **dadurch gekennzeichnet, dass** man als Komponenten (a) und (b) Stoffe einsetzt, bei deren Inkontakttreten eine spontane Koazervation stattfindet.

9. Verfahren nach Anspruch 8, **dadurch gekennzeichnet, dass** es sich bei den Komponenten (a) und (b) um unterschiedlich geladene Polyelektrolyte oder die Kombination aus einem Dicarbonsäurechlorid und einem Diamin handelt.

10. Verfahren nach mindestens einem der Ansprüche 1 bis 8, **dadurch gekennzeichnet, dass** man als Komponente (a) einen Gelbildner einsetzt, der bei erhöhter Temperatur flüssig oder pastös ist und beim Abkühlen geliert und als Komponente (b) einen kosmetisch akzeptables Ölkörper.

11. Verfahren nach mindestens einem der Ansprüche 1 bis 10, **dadurch gekennzeichnet, dass** man wässrige Zubereitungen, ölige Zubereitungen oder Emulsionen einsetzt.

12. Vorrichtung zur Vertropfung von Monomerlösungen, bestehend aus einem Druckbehälter (1) mit einem Zulauf (2) für die zu vertropfenden Einsatzstoffe, einer als Boden des Druckbehälters ausgelegten Lochscheibe (3), welche (a) Bohrungen zur Aufnahme von Kapillardüsen besitzt und (b) in einer Ebene horizontal zur Längsachse der Kapillaren von Kanälen durchzogen wird, durch die ein konstanter Gasstrom gelenkt werden kann.
